# EUROPEAN PATENT SPECIFICATION

(11) **EP 1 623 595 B1**
(45) Date of publication and mention of the grant of the patent: **30.06.2010**
(21) Application number: 04732338.1
(22) Date of filing: 12.05.2004
(51) Int. Cl.: H04W 48/04

(54) **SERVICE RESTRICTION IN MOBILE COMMUNICATION NETWORKS**
DIENSTLIMITIERUNG IN MOBILKOMMUNIKATIONSNETZWERKEN
RESTRICTION DE SERVICES DANS DES RESEAUX DE COMMUNICATION MOBILE

(30) Priority: 12.05.2003 GB 0310877
(43) Date of publication of application: 08.02.2006
(73) Proprietor: Hutchison Whampoa Three G IP (Bahamas) Limited, Nassau, New Providence (BS)
(72) Inventor: EL YAKHLIFI, Nadir, Berkshire SL6 4BJ (GB)
(74) Representative: Crawford, Andrew Birkby
(86) International application number: PCT/GB2004/002020
(87) International publication number: WO 2004/100595

(56) References cited:
- WO-A-02/089442
- WO-A-03/015353
- US-A- 2001 031 636
- US-A1- 2002 023 010
- US-A1- 2002 164 983

## Description

The present invention relates to a method of operating a mobile communications system and particularly to methods of supplying services to users of such networks.

### Background

Currently legacy mobile communications networks include (a) the GSM (Global System for Mobile Communications) mobile network (or second generation "2G" mobile network) which allows, for example, the exchange of voice calls, and (b) the GPRS (General Packet Radio Service) or 2.5G network which complements the GSM network and allows, to a limited extent, the access of data services using the same technology as the Internet.

The new mobile network, so called 3G, has increased capabilities and this, as well as offering services such as the exchange of voice calls, will enable users to communicate via video telephony. 3G networks also allow users to access additional data services currently not available on 2.5G networks, such as streamed (real time) video and advanced gaming. As for 2.5G networks, these data services will be offered using the same technology as the Internet. Licences to operate 3G networks have generally been granted by state governments and are restricted in terms of territory, usually to a particular country.

In the initial setting up of 3 G communications it is likely that 3G coverage is not available throughout a particular country and 3G users roaming within one country may have to use a 2G/2.5G network to make up for gaps in the 3G network. Thus a Greenfield 3G operator, i.e. non-incumbent operator, will have one or more 2G/2.5G "national roaming" partners, i.e. operators of 2G/2.5G networks. In the case of incumbent operators implementing a 3G network, their existing 2G/2.5G network will be used to make up for gaps in their 3G network. For the access of Internet-like services, a 3G customer who has been transferred to the 2G/2.5G network will not be able to receive advanced 3G services with adequate quality of service.

3G customers travelling abroad will use a network of the visited country, which may or may not be 3G. Even if the visited network is 3G there may be restrictions on the services that can be offered to 3G customers abroad due to national laws. For example a visitor to Saudi Arabia will not be able legally to participate in gambling and some countries are more restrictive than others in terms of what adult material can be distributed.

In 2.5 and 3G mobile communications, customers are allocated one of a possible range of IP (Internet Protocol) addresses on requesting access to the Internet-like services from their mobile terminals, the IP addresses most of the time being allocated from the subscriber's home network regardless of the location of the customer.

WO 03/015353A1 teaches a system wherein data is routed to an external network based on acceptance lists. US2001/0031636A1 discloses a roaming solution network solutions that disconnects service if a users account balance is depleted.

### Summary of the Invention

The present invention aims to solve two problems, namely the possibility of a 3G customer receiving poor service because he is registered with a 2G/2.5 G network and the possibility of a customer engaging in illegal activities using his mobile terminal via his home network.
An aspect of the invention relates to a method of operating a mobile communications system, wherein traffic from mobile devices is routed via a serving support node and a gateway support node to one or more home network servers accessible only by those mobile devices, the home network having links to other networks whereby traffic to/from mobile devices located outside the home network is routed via another network from/to the home network, the method comprising
(a) selecting at least one of the other networks to receive a restricted range of services from the home network servers;
(b) determining whether mobile devices are communicating with the home network via a selected network selected by step (a);
(c) identifying the selected network selected by step (a) to a server provided to determine which services from the home network service are allowed for the selected network and which services are not allowed;
(d) determining the services that are not allowed for the selected network; and
(e) barring the supply of services that are determined in step (d) not to be allowed for the selected network, to mobile devices communicating with the home network via the selected network.

Previous system operating methods have not taken any account of the network(s) via which mobile devices are communicating with their home networks. Thus, hitherto, at least in terms of services to be received, all mobile devices identified as being associated with the home network (the subscribers) have been treated in the same way.

The "selected networks" might be national or foreign 2G/2.5 G networks, or foreign networks of countries with restrictive laws (2G/2.5G or 3G).

As will be explained in more detail below, the network(s) being used by a mobile device whether local or international can be identified from identification data included in control messages by those networks. From this the home server(s) may be able to determine the available access technology (2.5G or 3G) from stored data.

Alternatively, step (b) above might involve examining the QoS (Quality of Service) profile of incoming control messages, whereby certain services (e.g. real time content) might be denied to users on 2.5G.

In the preferred embodiment of the invention, instead of routing all traffic to the home network servers via the same gateway support nodes, as at present, more than one type of gateway support node are used. Thus, for example, all international roaming traffic can be segregated from "home" traffic. Then, if the "selected" networks are foreign networks, only traffic received via a gateway support node dedicated to international roaming traffic needs to be examined to determine which selected network it has arrived from. Other traffic can be handled in the usual way and is not slowed down.

Each gateway support node has its own IP address pool. Traffic can then be segregated simply by checking the IP address allocated to the user.

### Brief Description of the Drawings

Embodiments of the invention will now be described by way of example only and with reference to the accompanying drawings in which:
Figure 1 is a schematic diagram showing an arrangement in which a dedicated gateway support node is used to separate traffic generated by customers roaming abroad from that generated by customers located in the country of the home network;
Figure 2 is a more detailed diagram showing the interaction required between the home network and the visited network to set up a session that makes use of a dedicated international roaming gateway support node;
Figure 3 is a diagram illustrating the call flow for session set up using a dedicated international roaming gateway support node;
Figure 4 shows information being transferred from an international roaming gateway support node to a RADIUS server, the information consisting of the IP address of the visited serving support node;
Figure 5 is a schematic diagram illustrating an alternative arrangement in which national and international roaming traffic uses a common gateway support node with home traffic;
Figure 6 shows information being transferred from the common gateway support node of Figure 5 to a server, the information consisting of the IP address of the serving support node;
Figure 7 is a decision tree for an arrangement in which the location of a mobile device is determined from the IP address of the serving support node, which was transferred from the common gateway support node to a server as shown in Figure 6;
Figure 8 shows information being transferred from a common gateway support node to a RADIUS server, the information consisting of the GTP version and part of the QoS profile (i.e. the "length" field);
Figure 9 shows a decision tree in which the type of network used by a mobile device is identified from the GTP (GPRS Tunnelling Protocol) version and the "length" field of the QoS profile, which were transferred from a common gateway support node to a server as shown in Figure 8;
Figure 10 shows information being transferred from the "home country" gateway support node to a server, the information consisting of the IP address of the serving support node;
Figure 11 shows a decision tree for an arrangement in which the type of network used by a mobile device is identified from the IP address of the serving support node, which was transferred from the "home country" gateway support node to a server as shown in Figure 10;
Figure 12 shows information being transferred from a common gateway support node to a server, the information consisting of the IP address of the serving support node; and
Figure 13 shows a decision tree for an arrangement in which the type of network used by a mobile device is identified from the IP address of the serving support node, which was transferred from a common gateway support node to a server as shown in Figure 12.

### Description of the preferred embodiments of the present invention

### 1. High Level requirements:

The following describes a number of possibilities that enable a mobile communications operator to restrict services provided to customers based on their location and/or access technology of their serving network (3G or 2.5G).

The requirements for this service are:
1. To provide capability to filter content based on current access technology supported by the serving network. This applies to both home country based and international roaming PS (Packet Switched) traffic for home services access.
2. To consider scenarios where the access technology may change without dropping the session (i.e. PDP (Packet Data Protocol) Context).
3. To provide capability to filter content based on current country of subscriber. For this, two levels of granularity are possible:
   - All international roaming customers are treated in the same way, e.g. no gambling service outside the home country even if allowed in the visited country, and
   - Services/contents are restricted depending on the country the subscriber roamed to, e.g. no gambling service only in countries where it is forbidden by law, e.g. in Saudi Arabia.
   In order to apply service/content restriction, only a coarse guide to the subscriber's location is necessary (e.g. MCC (Mobile Country Code) of roaming partner). The number of filters applicable to a particular country is outside the scope of this document, but could impose a significant performance requirement on any solution.
4. Users located in the home country preferably should not be impacted by any solution to requirement 1, in terms of range of service availability or speed of response.
   For access to home services, if the generated international and home country based PS traffic was routed through the same GGSNs (Gateway GPRS Support Node), every single request would have to be checked in order to determine whether or not the subscriber is allowed to access the desired service/content considering right or legal restrictions applicable outside the home country. The time taken by the application/service domain to process a request would considerably be affected therefore providing all subscribers (both roaming and non roaming) with a poor user experience. However this would be a possible short-term solution.

### 2. Service Restriction based on Subscriber's Location:

This section describes two solutions that enable operators to identify whether their subscribers are accessing home data services from abroad. Also these solutions enable operators to derive the location of their roaming subscribers (at a country level) from the Mobile Country Code (MCC) and the visited operator name from the Mobile Network Code (MNC). This gives operators the capability to control service access considering right and legal restrictions applicable outside the home country and, in some cases, applicable to a subset of countries only.

### 2.1 Solution 1:

This section depicts a solution that enables operators to:
- Segregate international PS traffic generated by outbound roamers accessing home data services from abroad, and
- Identify the country and visited operator serving their roaming subscribers.

### 2.1.1 Overview:

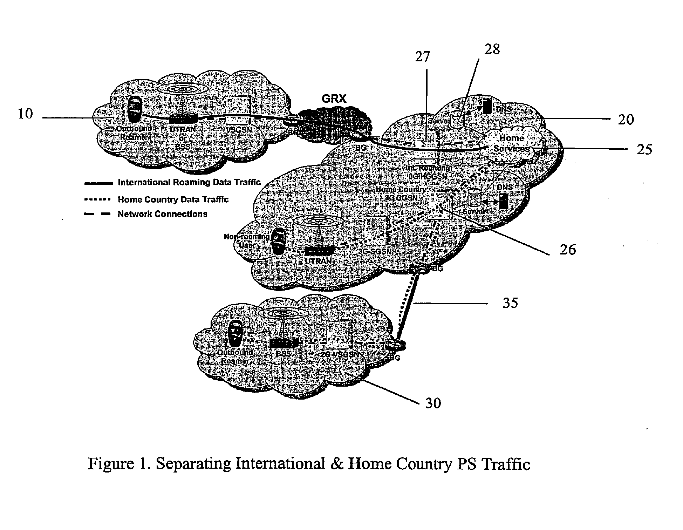

The idea is to use a dedicated GGSN for international PS traffic that is generated towards the home application/service domain. This is shown in Figure 1.

In Figure 1 the three clouds represent, respectively, a foreign network 10 which may be visited by a 3G subscriber, the home 3G subscriber network 20, and the network 30 of the national roaming partner (NRP). The home network and the foreign visited network are linked by a so-called GPRS roaming exchange, "GRX". The home network and that of the national roaming partner are linked by a leased line or other connection 35. Border gateways (BG) serve as the interfaces between individual networks and the GRX or leased line 35.

As shown in Figure 1 users on the national roaming network 30 and the home network 20 are directed to home services, indicated by reference 25 via a home country gateway support node 26. Ordinarily, users abroad would likewise be directed to this node. However, in this novel arrangement, a gateway support node 27 is dedicated to users abroad.

Now that the international PS traffic is routed through a dedicated GGSN, the visited SGSN (Serving GPRS Support Node) (VSGSN) IP address shall be transferred from this roaming GGSN to a server 28 (e.g. RADIUS server) in order to identify the country and visited operator serving the roaming subscribers.

Using this information in the application/service domain, the home operator can therefore apply some kind of filtering in order to restrict access to certain services/contents when customers are roaming abroad.

Figure 1 also shows Base Station Sub-systems (BSS) and UMTS (Universal Mobile Telecommunications System) Terrestrial Radio Access Networks (UTRAN).

### 2.1.2 Architecture:

This section gives an overview of one example of how the home network operator can implement the routing of international PS traffic through a dedicated GGSN and identify the country and visited operator.

### 2.1.2.1 Use of a Dedicated Roaming GGSN:

In order for customers roaming abroad to access home services, all PS sessions (i.e. PDP Contexts) have to be established towards the same GGSN. To do so, the 'Operator.net' APN (Access Point Name) has to be resolved to the IP address of the GGSN.

The above APN is also used when customers located in the home country gain access to services. Therefore if the same DNS (Domain Name Server) is used to resolve the 'Operator.net' APN regardless of the subscriber's location then international roaming and home country based traffic will go through the same GGSNs.

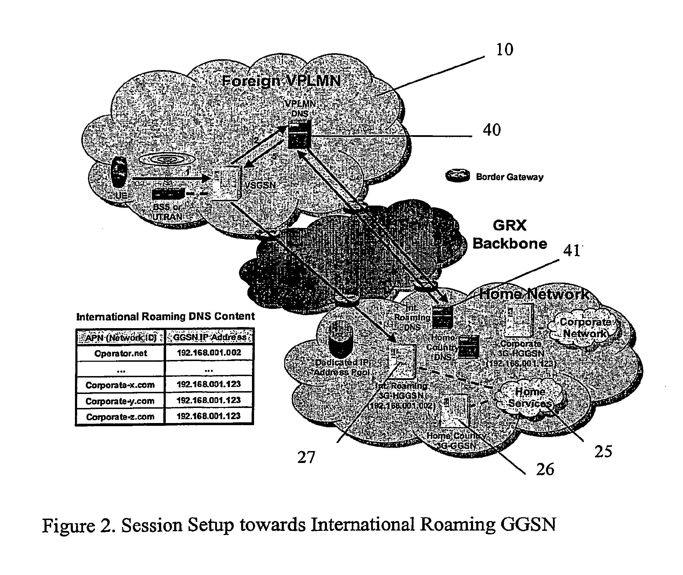

Instead the use of a DNS dedicated to queries (for APN resolution) received from foreign networks enables the home operator to allocate a different GGSN for international roaming PS traffic only. This is possible since the content of the roaming DNS is independent of the information contained in the home country DNS. An overview of this architecture is given in Figure 2.

Note that the IP address of the roaming DNS must be specified to roaming partners.

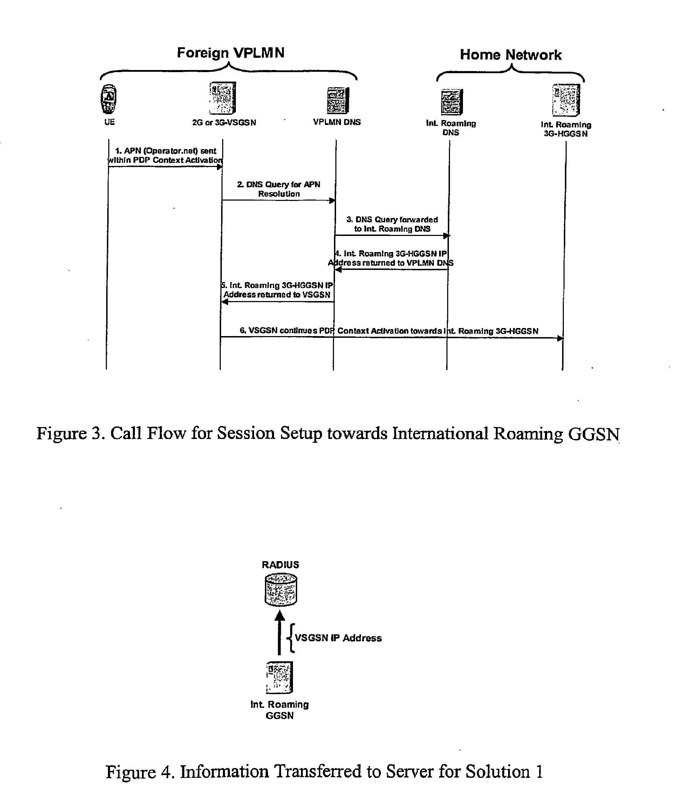

The call flow given in Figure 3 shows how the session is set up towards the GGSN dedicated to international roaming PS traffic for access to home services.

When the subscriber requests access to Internet-like services, the "Operator.net" APN is sent to the VSGSN of the visited network (step 1). The VSGSN sends the APN to the visited network (VPLMN (Visited Public Land Mobile Network)) domain name server (DNS) 40 (step 2) for resolution. The DNS 40 identifies the APN and passes the query to the international roaming DNS 41 (step 3) located in the subscriber's home network. After resolving the APN, this DNS 41 returns the IP address of the international roaming GGSN to the VPLMN DNS (step 4), which passes it to the VSGSN (step 5) after which the VSGSN communicates directly with the dedicated international roaming HGGSN (Home GGSN) in order to complete the session set up. At this point the international roaming HGGSN allocates an IP address to the subscriber from a range of addresses reserved for international roaming traffic only.

It will be appreciated that the home services servers 25 do not then need to check every incoming request. All that is needed for traffic received via GGSN 26 to be handled differently from traffic received via GGSN 27. Traffic received via the home country GGSN 26 can be handled as previously.

The content of the roaming DNS (in Figure 2) shows that the 'Operator.net' APN is resolved to the IP address of the international roaming GGSN, which allows all PS sessions using that APN to be established towards this GGSN for customers abroad.

Note that roaming corporate subscribers' sessions will be established towards the usual corporate GGSN, i.e. there are no dedicated GGSN for roaming corporate PS traffic. In this example, as far as corporate services are concerned, it is left to network operators to deal with the problems with which this invention is concerned.

Also, Figure 2 shows that a dedicated IP address pool can be allocated to the international roaming GGSN. This would enable the application/service domain to identify that a subscriber is accessing data services from abroad simply by checking the IP address that was allocated during the session setup.

Figure 2 also shows User Equipment (UE).

### 2.1.2.2 Identifying the Country and Visited Operator:

For international roaming PS traffic, the roaming GGSN shall transfer the VSGSN IP address to a server (e.g. RADIUS server) (See Figure 1) upon reception of the Create PDP Context Request message (as shown in Figure 4). The received VSGSN IP Address is used to derive the country and visited operator serving the roaming subscribers from respectively the MCC and MNC. To do so, the operator shall make use of a DNS (as shown in Figure 1) to store the MCC and MNC against the SGSN IP address of the corresponding roaming partner. The MCC/MNC information is retrieved through a reverse DNS query containing the VSGSN IP address that was received from the roaming GGSN.

The country and visited operator name are then derived and used by the application/service domain to apply service/content restriction where applicable.

### 2.2 Solution 2:

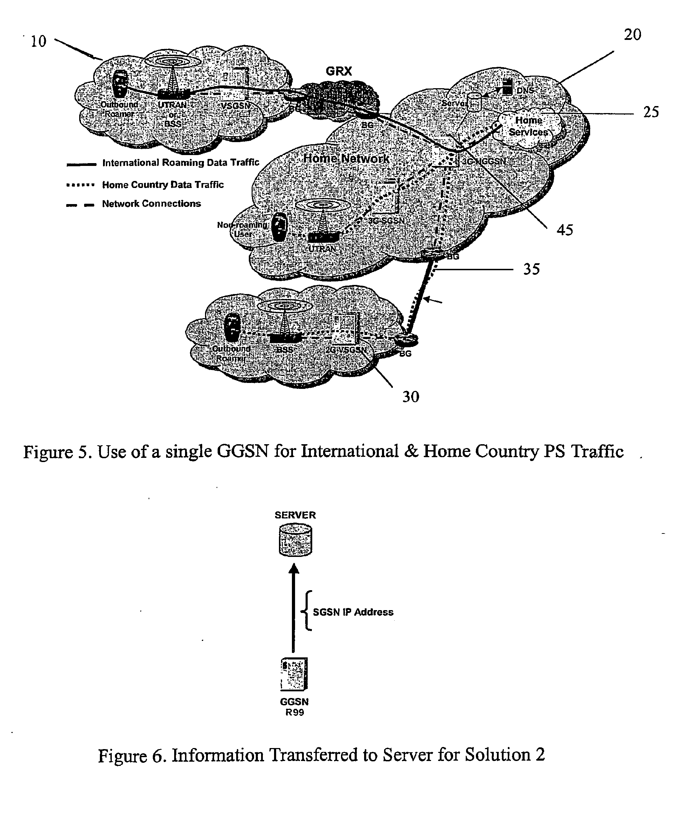

This section describes a "single GGSN" solution where the same GGSN is used for both home country based and international roaming PS traffic for access to home services. This is shown in Figure 5 with the single GGSN identified by reference 45.

Three scenarios can be identified:
- Subscribers on the home network, i.e. in the home country,
- Subscribers on the national roaming partner's network, i.e. in the home country, and
- Subscribers on a foreign network, i.e. abroad.

Upon reception of the Create PDP Context Request message, the home operator's GGSN shall transfer the SGSN IP address to a server (e.g. RADIUS server) (see Figure 5). This procedure is illustrated in Figure 6.

This will enable operators to:
- Differentiate between international, national and non-roaming subscribers, and
- Identify the country and operator serving their subscribers.

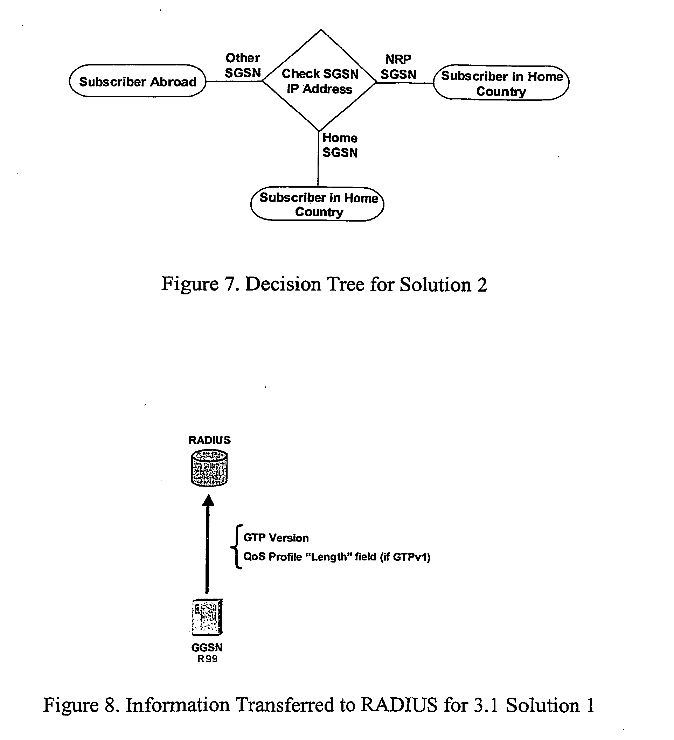

This is based on the assumption that UMTS (Universal Mobile Telecommunications System) to GPRS "Handover" towards the national roaming partner's network is not implemented. The received SGSN IP Address can then be checked against a list including IP addresses of the home operator's SGSNs and national roaming partner's SGSNs. This will enable to identify whether the subscriber is an international, national or non-roamer, and therefore whether the subscriber is abroad or in the home country (see decision tree in Figure 7).

In addition to this, the received SGSN IP Address is used to derive the country and visited operator serving the operator's subscribers from respectively the MCC and MNC. To do so, the operator shall make use of a DNS (as shown in Figure 5) to store the MCC and MNC against the SGSN IP address of the corresponding network operator.

The MCC/MNC information is retrieved through a reverse DNS query containing the SGSN IP address that was received from the home operator's GGSN. The country and serving operator name are then derived and used by the application/service domain to apply service/content restriction where applicable.

### 3. Service Restriction based on Access Technology:

This section describes a number of solutions that enable 3G operators to identify the access technology, i.e. GPRS (2.5G) or UMTS (3G), supported by the network serving their customers when these are accessing home data services. This enables 3G operators to control service access considering the level of QoS provided by the serving network that can also be the home network.

### 3.1 Solution 1:

This section describes a solution where the home operator's GGSN transfers the appropriate information to a server (e.g. a RADIUS server) (see Figure 1 & Figure 5) upon reception of a Create PDP Context Request or Update PDP Context Request message from an SGSN.

For 3GPP based networks, there are only three possible combinations of GTP version and QoS profile type in the Request messages sent to the home operator's GGSN:
R97/98 QoS sent over GTPv0, i.e. subscriber on 2.5G,
R97/98 QoS sent over GTPv1, i.e. subscriber on 2.5G, and
R99+R97/98 QoS sent over GTPv1, i.e. subscriber on 3G.

Therefore if:
The GTP version is 0, the subscriber is on 2.5G,
The GTP version is 1 and the QoS profile of R97/98, the subscriber is on 2.5G,
The GTP version is 1 and the QoS profile of R99+R97/98, the subscriber is on 3G.

3GPP TS 29.060 V3.7.0 - GPRS Tunnelling Protocol across the Gn and Gp Interface (1999-12) specifies that "a receiving end (in this case the home operator's GGSN) shall interpret the QoS profile Data field to be coded according to GSM 04.08 (i.e. according to the pre-Release '99 format) if the Length field value is 4". This is to be taken into account when GTPv1 is used between the SGSN and GGSN. Therefore if, upon reception of a Create PDP Context Request or Update PDP Context Request message from an SGSN, the home operator's GGSN sends to a server (e.g. RADIUS server) the GTP version number, and the value of the length field in the QoS information element (only if GTP version is 1) then the access technology, supported by the network serving the subscriber, can be identified and passed onto the application/service domain to enable service access control.
In the case where the IETF RADIUS protocol (IETF RFC 2865 - Remote Authentication Dial In User Service (RADIUS) (2000-06)) is used between the GGSN and the server, the GGSN needs to make use of the Vendor-Specific attribute (IETF RFC 2865 and IETF RFC 2866 - RADIUS Accounting (2000-06)) and Interim-Update message (IETF RFC 2866) defined for this protocol.

For this example, the transfer of information from the home operator's GGSN to the RADIUS server is illustrated in Figure 8.

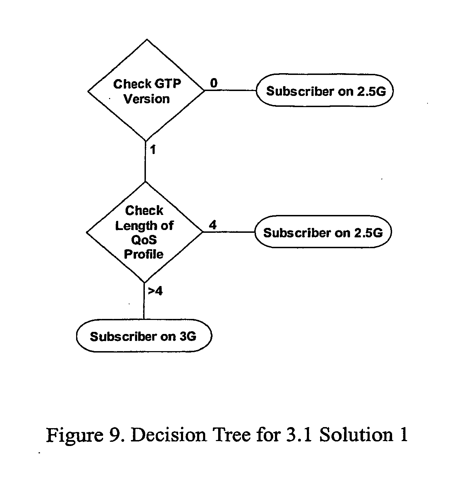

In order to identify the access technology serving a given subscriber, the decision tree represented in Figure 9 is applied.

If the operator decides to implement this solution for international roaming PS traffic only, then it is important to note that the adoption of the "dedicated GGSN" architecture (section 2.1) will have the benefit of not affecting the home country based PS traffic.

### 3.2 Solution 2:

This section describes a short-term solution in the case where solution 1 (section 3.1) cannot be immediately implemented due to limitations of the GGSN. This solution is based on the "dedicated GGSN" architecture (section 2.1).

### 3.2.1 International Roaming PS Traffic:

Section 2.1 shows that international roaming PS traffic (for access to home services) can be separated from home country based PS traffic by making use of a dedicated GGSN. Also, in a short-term period, the following assumptions can be made:

All subscribers abroad will roam either onto 2.5G networks or onto 3G networks that do not support real time radio bearers for PS-based applications, and GRX (GPRS Roaming eXchange) networks will not support QoS for real time applications.

Therefore it can be considered that all roaming subscribers, being allocated an IP address through the "international roaming" GGSN, access services from a 2.5G or 2.5G like network. This illustrated in Figure 1.

### 3.2.2 Home Country Based PS Traffic:

For home country based traffic, two scenarios can be identified:
Subscribers on the home network, i.e. on 3G, and
Subscribers on the national roaming partner's network, i.e. on 2.5G.

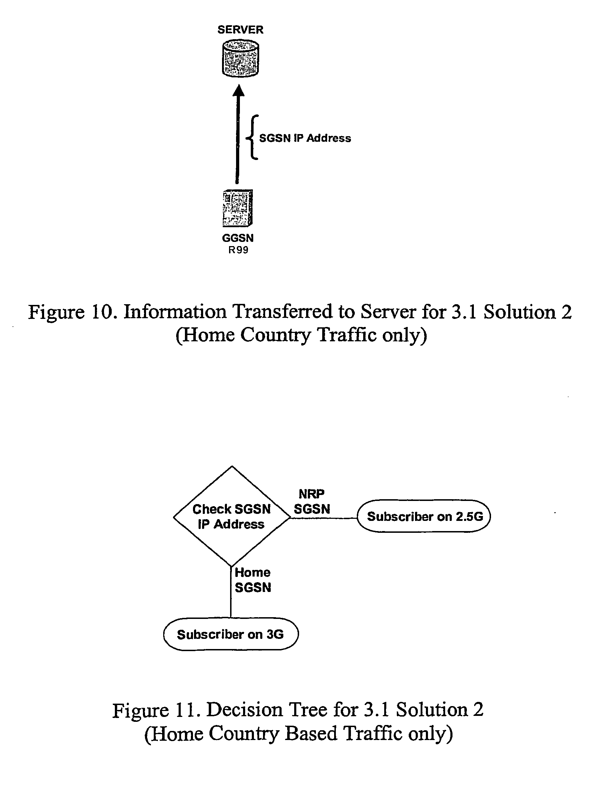

Upon reception of the Create PDP Context Request message, the home operator's GGSN shall transfer the SGSN IP address to a server (e.g. RADIUS server) (see Figure 1) to enable to differentiate between national and non-roaming subscribers. This is illustrated in Figure 10. This is based on the assumption that UMTS to GPRS "Handover" towards the national roaming partner's network is not implemented. The received SGSN IP Address can then be checked against a list including IP addresses of the home operator's SGSNs and national roaming partner's SGSNs. This will enable to identify whether the subscriber is roaming nationally or not, and therefore whether the subscriber is on 2.5G or 3G (see decision tree in Figure 11).

It is important to note that the adoption of the "dedicated GGSN" architecture (section 2.1) will enable the operator to perform an SGSN IP address look up for the home country based traffic only.

### 3.3 Solution 3:

This section describes another short-term solution in the case where solution 1 (section 3.1) cannot be immediately implemented due to limitations of the GGSN. This solution is based on an architecture where the same GGSN is used for both home country based and international roaming PS traffic (section 2.2). The assumptions on international roaming PS traffic, listed in section 3.2.1, are also considered for this solution.

Therefore three scenarios can be identified:
- Subscribers on the home network, i.e. on 3G,
- Subscribers on the national roaming partner's network, i.e. on 2.5G, and
- Subscribers on a foreign network, i.e. on 2.5G.

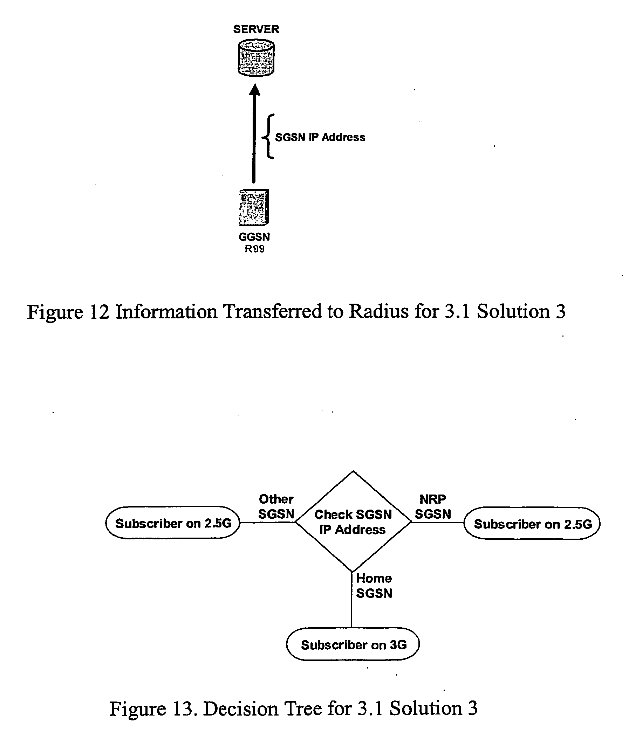

Upon reception of the Create PDP Context Request message, the home operator's GGSN shall transfer the SGSN IP address to a server (e.g. RADIUS server) (see Figure 5) to enable to differentiate between international, national and non-roaming subscribers. This is illustrated in Figure 12.

This is based on the assumption that UMTS to GPRS "Handover" towards the national roaming partner's network is not implemented.

The received SGSN IP Address can then be checked against a list including IP addresses of the home operator's SGSNs and national roaming partner's SGSNs. This will enable to identify whether the subscriber is an international, national or non-roaming user, and therefore whether the subscriber is on 2.5G or 3G (see decision tree in Figure 13).

## Claims

1. A method of operating a mobile communications system, wherein traffic from mobile devices is routed via a serving support node and a gateway support node to one or more home network servers accessible only by those mobile devices, the home network having links to other networks whereby traffic to/from mobile devices located outside the home network is routed via another network from/to the home network, the method comprising
(a) selecting at least one of the other networks to receive a restricted range of services from the home network servers;
(b) determining whether mobile devices are communicating with the home network via a selected network selected by step (a);
(c) identifying the selected network selected by step (a) to a server provided to determine which services from the home network service are allowed for the selected network and which services are not allowed;
(d) determining the services that are not allowed for the selected network; and
(e) barring the supply of services that are determined in step (d) not to be allowed for the selected network, to mobile devices communicating with the home network via the selected network.

2. A method as claimed in claim 1 wherein in step (c) the selected network is identified by said server when a packet data protocol context is received by the gateway support node.

3. A method as claimed in claim 1 in which control messages received by the home network include data identifying the network via which the traffic has been routed, and in which step (b) comprises examining said network identifying data for each mobile device communicating with the home network server(s).

4. A method as claimed in claim 3 in which the home network has links to at least one network based in another location, and in which said identifying data allows to identify that location.

5. A method as claimed in claim 1 to 4 in which the home network has links to at least one network providing lower level of quality of service (QoS) than the home network, and in which the available level of QoS is determined from the data identifying the network.

6. A method as claimed in claim 1 in which the home network has links to at least one network providing lower level of QoS than the home network, control messages received by the home network include data identifying the available level of QoS of the network(s) via which traffic has been routed, and step (b) comprises examining said QoS identifying data for each mobile device communicating with the home network.

7. A method as claimed in any receding claim in which a separate gateway support node is provided for traffic routed to the home network server(s) via one of the other networks.

8. A method as claimed in claim 7, in which steps (b) and (c) include discriminating between types of traffic according to the gateway support node via which they are routed.

9. A method as claimed in claim 8, in which the home network has links to at least one network based in another location, and in which one or more separate gateway support nodes is/are provided for traffic routed to the home network server(s) via networks based in other locations.

10. A method as claimed in claim 7 ,8 or 9 in which each gateway support node has a dedicated IP address pool.

11. A method as claimed in claim 10 in which steps (b) and (c) include the use of an IP address lookup to identify the gateway support node via which traffic has been routed to the home network server(s).

12. A method as claimed in claim 11 wherein said IP address lookup is capable of identifying whether the mobile terminal is in a 2.5G or a 3G network.

13. A method as claimed in claim 2 or 9 in which step (a) comprises selecting the networks of one or more locations and step (e) comprises barring the supply of services to users on the basis of the laws in the locations of the selected network(s).

14. A method as claimed in claim 5 or 6 in which step (a) comprises selecting one or more networks having lower level of QoS than the home network and step (e) comprises barring the supply of certain services to mobile devices using the selected network(s).

## Patentansprüche

1. Verfahren zum Betreiben eines mobilen Kommunikationssystems, bei dem Verkehr von Mobilgeräten über einen Serving-Support-Knoten und einen Gateway-Support-Knoten zu wenigstens einem Heimnetzwerkserver geleitet wird, auf den lediglich durch diese Mobilgeräte zugegriffen werden kann, wobei das Heimnetzwerk über Verknüpfungen zu anderen Netzwerken verfügt, wodurch der Verkehr zu/von Mobilgeräten, die sich außerhalb des Heimnetzwerks befinden, über ein weiteres Netzwerk von/zu dem Heimnetzwerk geleitet wird, wobei das Verfahren umfasst:
(a) Auswählen wenigstens eines der anderen Netzwerke, um einen beschränkten Umfang von Diensten von den Heimnetzwerkservern zu empfangen;
(b) Ermitteln, ob die Mobilgeräte mit dem Heimnetzwerk über ein gewähltes Netzwerk kommunizieren, das bei Schritt (a) gewählt wurde,
(c) Identifizieren des gewählten Netzwerks, das bei Schritt (a) gewählt wurde, für einen Server, der vorgesehen ist um zu ermitteln, welche Dienste von dem Heimnetzwerkdienst für das gewählte Netzwerk zulässig sind und welche Dienste nicht zulässig sind;
(d) Ermitteln der Dienste, die für das gewählte Netzwerk nicht zulässig sind; und
(c) Sperren der Bereitstellung von Diensten, die in Schritt (d) für das Netzwerk als nicht zulässig ermittelt wurden, für die Mobilgeräte, die mit dem Heimnetzwerk über das gewählte Netzwerk kommunizieren.

2. Verfahren nach Anspruch 1, bei dem bei Schritt (c) das gewählte Netzwerk von dem Server identifiziert wird, wenn ein Paketdaten-Protokolltext von dem Gateway-Support-Knoten empfangen wird.

3. Verfahren nach Anspruch 1, bei dem Steuernachrichten, die von dem Heimnetzwerk empfangen werden, Daten enthalten, die das Netzwerk identifizieren, über die der Verkehr geleitet wurde, und bei dem der Schritt (b) das Untersuchen der Netzwerkidentifikationsdaten für jedes Mobilgerät umfasst, das mit dem (den) Heimnetzwerkserver(n) kommuniziert.

4. Verfahren nach Anspruch 3, bei dem das Heimnetzwerk Verknüpfungen zu wenigstens einem Netzwerk hat, das sich an einem anderen Ort befindet, und bei dem es die Identifikationsdaten gestatten, diesen Ort zu identifizieren.

5. Verfahren nach Anspruch 1 bis 4, bei dem das Heimnetzwerk Verknüpfungen zu wenigstens einem Netzwerk hat, das eine Dienstgüte (QoS) eines geringeren Grades als das Heimnetzwerk bereitstellt, und bei dem der verfügbare Grad der Dienstgüte aus den Daten ermittelt wird, die das Netzwerk identifizieren.

6. Verfahren nach Anspruch 1, bei dem das Heimnetzwerk Verknüpfungen zu wenigstens einem Netzwerk hat, das eine QoS eines geringeren Grades als das Heimnetzwerk bereitstellt, Steuernachrichten, die von dem Heimnetzwerk empfangen werden, Daten beinhalten, die den verfügbaren Grad der QoS des Netzwerks (der Netzwerke) identifizieren, über das (die) der Verkehr geleitet wurde, und der Schritt (b) das Untersuchen der Daten, die die QoS identifizieren, für jedes Mobilgerät enthält, das mit dem Heimnetzwerk kommuniziert.

7. Verfahren nach einem der vorhergehenden Ansprüche, bei dem ein separater Gateway-Support-Knoten für Verkehr bereitgestellt ist, der zu dem (den) Heimnetzwerkserver(n) über eines der anderen Netzwerke geleitet wird.

8. Verfahren nach Anspruch 7, bei dem die Schritte (b) und (c) das Unterscheiden zwischen Verkehrstypen gemäß dem Gateway-Support-Knoten umfasst, über den sie geleitet werden.

9. Verfahren nach Anspruch 8, bei dem das Heimnetzwerk Verknüpfungen zu wenigstens einem Netzwerk hat, das sich an einem anderen Ort befindet, und bei dem wenigstens ein separater Gateway-Support-Knoten für den Verkehr vorgesehen ist, der zu dem (den) Heimnetzwerkserver(n) über Netzwerke geleitet wird, die sich an andern Orten befinden.

10. Verfahren nach Anspruch 7, 8 oder 9, bei dem jeder Gateway-Support-Knoten einen zugewiesenen IP-Adressenvorrat hat.

11. Verfahren nach Anspruch 10, bei dem die Schritte (b) und (c) die Verwendung einer IP-Adressensuche umfassen, um den Gateway-Support-Knoten zu identifizieren, über den Verkehr zu dem (den) Heimnetzwerkserver(n) geleitet wurde.

12. Verfahren nach Anspruch 11, bei dem die IP-Adressensuche in der Lage ist zu identifizieren, ob sich das mobile Endgerät in einem 2,5G- oder einem 3G-Netzwerk befindet.

13. Verfahren nach Anspruch 2 oder 9, bei dem der Schritt (a) das Wählen der Netzwerke wenigstens eines Ortes und der Schritt (e) das Sperren der Bereitstellung von Diensten für Benutzer auf der Basis von Gesetzen an den Orten des (der) gewählten Netzwerks (Netzwerke) umfasst.

14. Verfahren nach Anspruch 5 oder 6, bei dem der Schritt (a) das Wählen wenigstens eines Netzwerks, das einen geringeren Grad einer QoS hat als das Heimnetzwerk, und der Schritt (e) das Sperren der Bereitstellung bestimmter Dienste für Mobilgeräte umfasst, die das (die) gewählte(n) Netzwerk(e) benutzen.

## Revendications

1. Procédé d'exploitation d'un système de communication mobile, dans lequel le trafic à partir de dispositifs mobiles est routé via un noeud de support de desserte et un noeud de support de passerelle à un ou plusieurs serveurs de réseau de rattachement accessibles seulement par ces dispositifs mobiles, le réseau de rattachement ayant des liens aux autres réseaux par lesquels le trafic vers/à partir de dispositifs mobiles situés en dehors du réseau de rattachement est routé via un autre routeur à partir/vers le réseau de rattachement, le procédé comprenant :
(a) la sélection d'au moins un des autres réseaux pour recevoir une gamme limitée de services à partir des serveurs de réseau de rattachement ;
(b) la détermination si les dispositifs mobiles sont en communication avec le réseau de rattachement via un réseau sélectionné sélectionné par l'étape (a) ;
(c) l'identification du réseau sélectionné sélectionné par l'étape (a) à un serveur fourni pour déterminer quels services à partir du service de réseau de rattachement sont alloués au réseau sélectionné et quels services ne sont pas alloués ;
(d) la détermination des services qui ne sont pas alloués au réseau sélectionné ; et
(e) l'exclusion de la fourniture de services qui sont déterminés dans l'étape (d) à ne pas autoriser au réseau sélectionné, aux dispositifs mobiles communiquant avec le réseau de rattachement via le réseau sélectionné.

2. Procédé selon la revendication 1, dans lequel dans l'étape (c) le réseau sélectionné est identifié par ledit serveur lorsqu'un contexte de protocole de données de paquet est reçu par le noeud de support de passerelle.

3. Procédé selon la revendication 1, dans lequel des messages de commande reçus par le réseau de rattachement comprennent des données identifiant le réseau à travers lequel le trafic a été routé, et dans lequel l'étape (b) comprend l'examen dudit réseau identifiant des données pour chaque dispositif mobile communiquant avec le(s) serveur(s) de réseau de rattachement.

4. Procédé selon la revendication 3, dans lequel le réseau de rattachement a des liens à au moins un réseau sur la base d'un autre lieu, et dans lequel lesdites données d'identification permettent d'identifier ce lieu.

5. Procédé selon la revendication 1 à 4, dans lequel le réseau de rattachement a des liens à au moins un réseau fournissant un niveau de qualité de service (QoS) inférieur au réseau de rattachement, et dans lequel le niveau disponible de QoS est déterminé à partir de données identifiant le réseau.

6. Procédé selon la revendication 1, dans lequel le réseau de rattachement a des liens à au moins un réseau fournissant un niveau de QoS inférieur au réseau de rattachement, des messages de commande reçus par le réseau de rattachement comprennent des données identifiant le niveau disponible de QoS de(s) réseau(x) à travers lequel le trafic a été routé, et l'étape (b) comprend l'examen desdites données d'identification de QoS pour chaque dispositif mobile communiquant avec le réseau de rattachement.

7. Procédé selon l'une quelconque des revendications précédentes, dans lequel un noeud de support de parcelle séparé est fourni pour le trafic routé au(x) serveur(s) de réseau de rattachement via un des autres réseaux.

8. Procédé selon la revendication 7, dans lequel les étapes (b) et (c) comprennent la discrimination entre des types de trafic selon le noeud de support de passerelle à travers lequel ils sont routés.

9. Procédé selon la revendication 8, dans lequel le réseau de rattachement a des liens à au moins un réseau sur la base d'un autre lieu, et dans lequel un ou plusieurs noeuds de support de passerelle séparés est/sont fournis pour le trafic routé au(x) serveur(s) de réseau de rattachement via des réseaux basés dans d'autres lieux.

10. Procédé selon la revendication 7, 8 ou 9 dans lequel chaque noeud de support de passerelle a un groupement d'adresse IP dédié.

11. Procédé selon la revendication 10, dans lequel des étapes (b) et (c) comprennent l'utilisation d'une consultation d'adresse IP pour identifier le noeud de support de passerelle à travers lequel le trafic a été routé au(x) serveur(s) de réseau de rattachement.

12. Procédé selon la revendication 11, dans lequel ladite consultation d'adresse IP est capable d'identifier si le terminal de mobile est un réseau 2.5G ou 3G.

13. Procédé selon la revendication 2 ou 9, dans lequel une étape (a) comprend la sélection des réseaux d'un ou de plusieurs lieux et l'étape (e) comprend l'exclusion de la fourniture de services aux utilisateurs sur la base des lois dans les lieux du(des) réseau(x) sélectionné(s).

14. Procédé selon la revendication 5 ou 6, dans lequel l'étape (a) comprend la sélection d'un ou plusieurs réseaux ayant un niveau de QoS inférieur au réseau de rattachement et l'étape (e) comprend l'exclusion de la fourniture de certains services aux dispositifs mobiles utilisant le(s) réseau(x) sélectionné(s).
